# FASCICULE DE BREVET EUROPEEN

(11) **EP 2 460 050 B1**
(45) Date de publication et mention de la délivrance du brevet: **06.09.2017**
(21) Numéro de dépôt: 10754356.3
(22) Date de dépôt: 19.07.2010
(51) Int. Cl.: G02F 1/163, G02F 1/155

(54) **SYSTEME ELECTROCHROME TRANSPARENT**
TRANSPARENTES ELEKTROCHROMES SYSTEM
TRANSPARENT ELECTROCHROMIC SYSTEM

(30) Priorité: 28.07.2009 FR 0955265
(43) Date de publication de la demande: 06.06.2012
(73) Titulaire: Essilor International (Compagnie Générale d'Optique), 94220 Charenton-le-Pont (FR)
(72) Inventeur: BIVER, Claudine, 94220 Charenton-le-Pont (FR); CANO, Jean-Paul, 94220 Charenton-le-Pont (FR); DULUARD, Sandrine, 94220 Charenton-le-Pont (FR); SAUGEY, Anthony, 94220 Charenton-le-Pont (FR)
(74) Mandataire: Cabinet Plasseraud
(86) Numéro de dépôt international: PCT/FR2010/051510
(87) Numéro de publication internationale: WO 2011/015753

(56) Documents cités:
- WO-A1-2008/000607
- FR-A1- 2 260 167
- US-A- 5 142 407
- US-A1- 2002 005 977

## Description

La présente invention concerne un système électrochrome transparent, ainsi qu'un procédé d'utilisation d'un tel système.

De nombreux systèmes électrochromes transparents existent déjà, dans lesquels des substances électroactives sont simultanément oxydées et réduites au contact d'électrodes d'alimentation. Certaines au moins de ces substances électroactives ont des couleurs qui sont différentes entre leurs formes oxydée et réduite. Le système change ainsi de couleur et/ou présente une absorption lumineuse variable lorsqu'une commande électrique qui est appliquée entre les électrodes d'alimentation est elle-même variée.

Dans le cas de la présente description, on appelle électrodes d'alimentation d'un système électrochrome qui incorpore des substances susceptibles d'être oxydées ou réduites lors d'un fonctionnement du système, des électrodes qui sont destinées à transférer des électrons à celles des substances qui sont destinées à être réduites, ou à recevoir des électrons de la part des substances qui sont destinées à être oxydées. Ainsi, un courant électrique circule dans les électrodes d'alimentation. La commande électrique du système électrochrome peut être directement ce courant. Alternativement, la commande électrique peut être une tension électrique qui est appliquée entre les deux électrodes d'alimentation. Dans tous les cas, un fonctionnement inverse du système électrochrome est obtenu lorsque la polarité des électrodes d'alimentation est inversée.

De façon connue, un tel système électrochrome transparent peut être incorporé dans un vitrage, un verre de lunettes ophtalmiques, un verre de masque ou une visière de casque. De façon générale, on entend par système transparent un système qui permet une vision distincte à travers celui-ci, c'est-à-dire qui permet à un observateur qui est situé d'un côté du système de voir nettement un objet ou une scène qui est située à distance et de l'autre côté du système. Autrement dit, le système ne provoque pas de diffusion ou de diffraction de la lumière transmise à travers celui-ci, qui soit perceptible par l'observateur et brouille sa vision, quelque soit l'état électrique du système.

Il est aussi connu de réaliser un tel système électrochrome sous forme d'un ensemble de cellules qui sont juxtaposées les unes à côté des autres, parallèlement à des parois externes du système. Une telle configuration présente de multiples avantages, parmi lesquels la réduction de fuites vers l'extérieur du système d'un milieu fluide qui contient les substances électroactives, une augmentation de la résistance du système à des forces de compression, etc. Dans ce cas, le système électrochrome transparent comprend :
- deux parois externes qui sont parallèles, le système étant transparent pour une direction de regard traversant ces parois externes entre deux côtés opposés,
- un réseau de parois internes qui est disposé entre les deux parois externes et qui définit l'ensemble des cellules, les parois internes s'étendant perpendiculairement aux parois externes ;
- des portions de liquide et/ou de gel qui sont contenues respectivement dans les cellules ;
- des premières et secondes substances électroactives qui sont réparties dans les portions de liquide et/ou de gel, avec des potentiels électriques respectifs d'oxydo-réduction qui sont différents, certaines au moins de ces substances électroactives ayant un effet optique variable entre une forme oxydée et une forme réduite de celles-ci ; et
- deux électrodes d'alimentation transparentes, qui sont destinées à être reliées respectivement à deux bornes d'alimentation d'un ensemble de source électrique variable, chacune de ces électrodes d'alimentation étant en contact électrique direct avec les portions de liquide et/ou de gel qui sont contenues dans certaines au moins des cellules pour transférer des électrons vers ou à partir de certaines au moins des substances électroactives, d'une façon inverse entre les premières et secondes substances électroactives à un même instant.

Enfin, il est encore connu, notamment de WO 2010/040954 publié le 15 avril 2010, pour un tel système électrochrome transparent à cellules, de disposer les deux électrodes d'alimentation sur une même des deux parois externes, sans qu'elles aient de contact électrique direct entre elles. Les deux électrodes d'alimentation sont alors juxtaposées sur la face de cette paroi externe qui est tournée vers le milieu qui contient les substances électroactives, en étant séparées l'une de l'autre par une bande isolante électriquement. Une telle disposition des électrodes d'alimentation permet notamment de réduire une contribution de celles-ci à l'absorption lumineuse du système, quelque soit son état électrochimique. Le système électrochrome peut alors avoir un contraste qui est supérieur lors d'un fonctionnement commandé. En outre, cette disposition des deux électrodes d'alimentation sur la même paroi externe permet d'obtenir des systèmes électrochromes qui sont minces, notamment avec une épaisseur du milieu qui contient les substances électroactives inférieure à 50 µm (micromètre), par exemple d'environ 20 µm.

En particulier, le document US 2002/005977 décrit un tel système électroactif transparent dans lequel les deux électrodes d'alimentation sont portées par une même paroi externe du système, sur un seul côté du volume qui renferme le milieu avec les substances électroactives.

Toutefois, les difficultés et inconvénients suivants ont été observés lors du fonctionnement d'un tel système électrochrome transparent à cellules :
- bien que la différence de potentiel électrique entre les deux électrodes d'alimentation soit contrôlée, la valeur du potentiel électrique sur chaque électrode n'est pas contrôlée individuellement. Il peut alors en résulter des altérations irréversibles des substances électroactives, qui aboutissent à une dégradation du système électrochrome ;
- les substances électroactives qui ont été converties entre leurs formes oxydées et réduites sur l'une ou l'autre des électrodes d'alimentation se neutralisent réciproquement dans une zone qui est située entre les deux électrodes d'alimentation. Il en résulte une consommation inutile de courant électrique par rapport à l'efficacité optique du système électrochrome ;
- la neutralisation réciproque des substances électroactives qui ont réagi sur l'une ou l'autre des électrodes d'alimentation produit une bande entre ces deux électrodes, dans laquelle la coloration du système est mal contrôlée ; et
- un délai peut exister entre une modification d'une tension électrique qui est appliquée entre les électrodes d'alimentation pour commander un changement de couleur du système électrochrome et l'apparition effective de ce changement de couleur. Autrement dit, le temps de réponse du système peut être trop long pour certaines applications.

Un but de la présente invention consiste donc à remédier à l'un au moins de ces inconvénients.

Pour cela, l'invention propose un système électrochrome transparent à cellules tel que décrit précédemment, qui permet une vision distincte à travers ce système, et qui forme un vitrage, un hublot d'avion, un verre de lunettes ophtalmiques, une visière de casque, un verre de masque, ou une pastille destinée à être appliquée sur un verre ophtalmique, une visière de casque ou un verre de masque, dans lequel les électrodes d'alimentation sont portées par une même des deux parois externes du système, et qui comprend en outre au moins une électrode transparente supplémentaire. Cette électrode supplémentaire n'a pas de contact électrique direct avec les électrodes d'alimentation à l'intérieur du système électrochrome. En outre, elle est parallèle aux électrodes d'alimentation à l'intérieur de certaines au moins des cellules.

D'après une caractéristique supplémentaire de l'invention, le système comprend en outre, pour certaines au moins des cellules, un film isolant électriquement qui est disposé entre l'électrode supplémentaire et la portion de liquide et/ou de gel contenue dans chacune de ces cellules, de façon à supprimer un contact entre ladite portion de liquide et/ou de gel et l'électrode supplémentaire.

Selon une première utilisation de l'électrode supplémentaire, celle-ci peut être utilisée pour fixer une valeur du potentiel électrique dans les portions de liquide et/ou de gel, en dehors des électrodes d'alimentation. Il s'agit alors d'une électrode de référence, qui évite que le potentiel électrique, à l'intérieur des cellules, adopte localement des valeurs absolues qui soient trop élevées et susceptibles d'altérer les substances électroactives. Dans ce cas, l'électrode supplémentaire est en contact avec les portions de liquide et/ou de gel, et elle est maintenue à un potentiel électrique qui est situé à l'intérieur d'un domaine de stabilité électrochimique du système électrochrome.

Selon une deuxième utilisation de l'électrode supplémentaire, elle peut aussi être utilisée pour réduire la neutralisation réciproque des substances électroactives qui ont réagi aux électrodes d'alimentation. Par exemple, un potentiel électrique peut être appliqué à l'électrode supplémentaire, qui maintient à l'écart certaines de ces substances lorsque leur forme oxydée ou réduite qui a été produite sur l'une des électrodes d'alimentation présente une charge électrique. De cette façon, une consommation inutile de courant électrique peut être supprimée. De même, la zone dans laquelle les substances électroactives se neutralisent réciproquement peut ainsi être moins visible.

Enfin, selon une troisième utilisation, l'électrode supplémentaire peut encore être utilisée pour attirer l'une des substances électroactives dans sa forme oxydée ou réduite, lorsqu'elle est chargée électriquement, vers l'électrode d'alimentation sur laquelle cette substance est destinée à réagir. Une polarisation adéquate de l'électrode supplémentaire permet ainsi de diminuer le temps de réponse du système électrochrome.

Pour les deuxième et troisième utilisations de l'électrode supplémentaire, le potentiel électrique qui est appliqué à celle-ci peut être situé à l'intérieur ou à l'extérieur de l'intervalle limité par les potentiels électriques qui sont appliqués respectivement aux deux électrodes d'alimentation. Le système électrochrome peut alors comprendre en outre un film isolant électriquement qui est disposé entre l'électrode supplémentaire et la portion de liquide et/ou de gel contenue dans chaque cellule. De cette façon, un contact électrique entre la portion de liquide et/ou de gel et l'électrode supplémentaire est supprimé. L'électrode supplémentaire ne conduit alors aucun courant électrique pendant un fonctionnement du système, et son rôle est limité à un effet capacitif à l'intérieur du système. Un tel film isolant électriquement est préconisé lorsque le potentiel électrique qui est appliqué à l'électrode supplémentaire est situé à l'extérieur de l'intervalle limité par les potentiels électriques qui sont appliqués respectivement aux deux électrodes d'alimentation. Il évite alors que certaines des espèces électroactives soient oxydées ou réduites au contact de l'électrode supplémentaire, ou soient dégradées irréversiblement à son contact.

L'électrode supplémentaire introduite par l'invention peut être portée par l'autre des deux parois externes du système que celle qui porte les deux électrodes d'alimentation.

Alternativement, elle peut être portée par la même paroi externe que celle qui porte les deux électrodes d'alimentation. Dans ce cas, l'électrode supplémentaire peut être disposée entre les deux électrodes d'alimentation, selon une direction parallèle à la paroi externe. Elle peut aussi être disposée entre la paroi externe et les deux électrodes d'alimentation, selon une direction perpendiculaire à la paroi externe, avec un film isolant qui est intermédiaire entre l'électrode supplémentaire et chacune des électrodes d'alimentation. Dans cette dernière configuration, et si l'électrode supplémentaire n'est pas en contact avec les portions de liquide et/ou de gel, sa fonction est limitée à la seconde ou la troisième utilisation mentionnée plus haut.

Eventuellement, le système peut comprendre en outre une autre électrode supplémentaire qui est portée par l'autre des parois externes que celle qui porte la première électrode supplémentaire.

Un système électrochrome selon l'invention peut comprendre en outre un ensemble de source électrique à trois bornes de sortie, dont deux de ces bornes de sortie sont connectées électriquement et respectivement aux deux électrodes d'alimentation pour produire un courant électrique qui circule dans le système. La troisième borne de sortie de l'ensemble de source électrique est connectée à l'électrode supplémentaire. L'ensemble de source est alors adapté pour contrôler de façon variable au moins une tension électrique qui est présente entre l'une des électrodes d'alimentation et l'électrode supplémentaire.

Lorsque le système comporte deux électrodes supplémentaires, l'alimentation en courant électrique des électrodes d'alimentation d'une part, et une tension de polarisation électrique qui est appliquée entre les deux électrodes supplémentaires d'autre part, peuvent être fournies respectivement par deux ensembles de sources électriques indépendants.

Un système électrochrome selon l'invention est particulièrement adapté pour former un vitrage, un hublot d'avion, un verre de lunettes ophtalmiques, une visière de casque, un verre de masque, ou une pastille qui est destinée à être appliquée sur un verre ophtalmique, une visière de casque ou un verre de masque.

L'invention propose aussi un procédé d'utilisation d'un système électrochrome transparent selon l'invention, suivant lequel une tension électrique est appliquée entre l'électrode supplémentaire et l'une au moins des électrodes d'alimentation, de sorte que l'électrode supplémentaire ait un potentiel électrique qui est en dehors d'un intervalle limité par les potentiels électriques respectifs des électrodes d'alimentation, tous les potentiels électriques étant mesurés par rapport à une borne de référence commune.

D'autres particularités et avantages de la présente invention apparaîtront dans la description ci-après d'exemples de réalisation non limitatifs, en référence aux dessins annexés, dans lesquels :

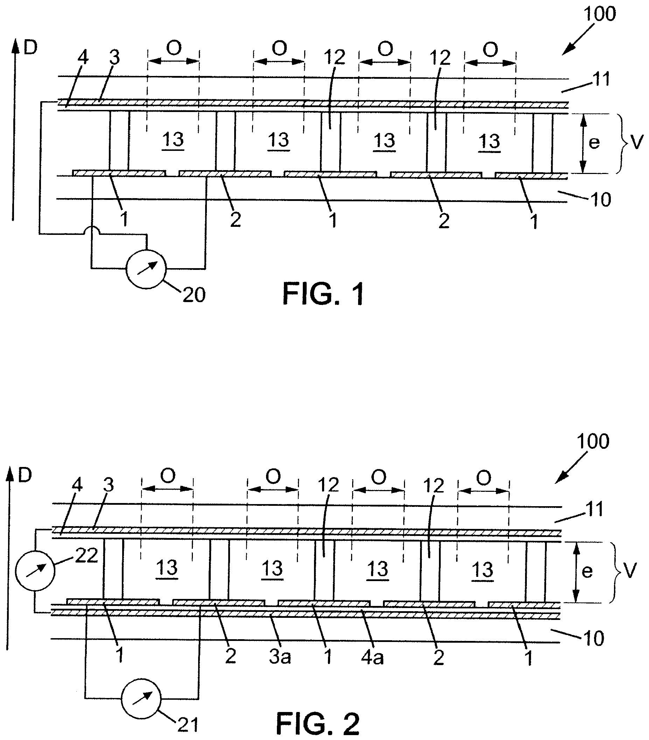

- les figures 1 à 6 sont des coupes transversales de systèmes électrochromes selon l'invention, conformément à divers modes de réalisation.

Pour raison de clarté de ces figures, les dimensions des éléments qui sont représentés ne sont pas en rapport avec des dimensions réelles, ni avec des rapports de dimensions réels. En outre, des références identiques qui sont utilisées dans des figures différentes désignent des éléments identiques ou qui ont des fonctions identiques.

Un système électrochrome 100 selon l'invention comporte deux parois externes 10 et 11, qui sont transparentes et parallèles l'une à l'autre. Les parois 10 et 11 peuvent être en verre ou en tout matériau organique qui est transparent pour la lumière visible. Sur les figures, les parois 10 et 11 sont planes, mais il est entendu qu'elles peuvent être alternativement courbes, concaves ou convexes, en fonction de l'application particulière de chaque système électrochrome. En outre, elles peuvent avoir des dimensions quelconques, en longueur et en largeur. Par exemple, l'une des deux parois externes 10 ou 11 peut être un verre de lunettes ophtalmiques, et l'autre paroi externe peut être un film transparent qui est associé à ce verre. Pour une telle application, le verre qui forme l'une des parois externes peut être en tout matériau organique transparent qui est utilisé dans le domaine ophtalmique, et le film peut être en polyéthylène-téréphtalate, par exemple. Les parois externes 10 et 11 sont maintenues à distance l'une de l'autre, de façon à définir un volume interne V compris entre elles. Le volume V est fermé, par exemple au moyen d'un joint périphérique étanche, non représenté. Le volume V peut avoir une épaisseur e qui est égale à 20 µm, par exemple, perpendiculairement aux parois externes 10 et 11.

Sur toutes les figures, D désigne une direction lumineuse qui traverse le système électrochrome 100 entre deux côtés opposés de celui-ci. Par exemple, la direction D peut être sensiblement perpendiculaire aux parois 10 et 11. En particulier, le système 100 est transparent pour un observateur qui regarde à travers le système selon la direction D.

La paroi 10, par exemple, porte deux électrodes transparentes 1 et 2. Celles-ci peuvent être constituées de tout matériau conducteur électriquement, qui apparaît transparent lorsque son épaisseur est très faible, ou qui est intrinsèquement transparent. Par exemple, les électrodes 1 et 2 peuvent être en oxyde d'indium dopé à l'étain (ITO pour «indium-tin oxide» en anglais) ou en oxyde d'étain dopé au fluor (SnO₂:F). Les électrodes 1 et 2 sont disposées sur la face de la paroi 10 qui est interne au système, de façon à recouvrir sensiblement toute cette face sans être en contact direct l'une avec l'autre. Par exemple, les électrodes 1 et 2 peuvent avoir un motif en peignes imbriqués, de sorte que ces électrodes apparaissent en alternance sur les figures, dans un plan de section qui est perpendiculaire aux dents des peignes. D'autres motifs peuvent être utilisés de façon équivalente. Pour être isolées électriquement l'une de l'autre, les électrodes 1 et 2 sont séparées par une bande qui est dépourvue au moins en partie de matériau conducteur. La largeur de cette bande peut être, par exemple, 18 µm environ.

Les électrodes 1 et 2 sont destinées à être connectées électriquement à une source électrique variable référencée 20 ou 21, en fonction du mode de réalisation considéré. L'homme du métier sait comment concevoir et réaliser les connexions électriques nécessaires, si bien qu'une description de telles connexions n'est pas reprise ici.

Un milieu fluide est enfermé dans le volume V. Ce milieu peut être un liquide ou un gel, en fonction de sa composition. Il contient les substances électroactives qui sont destinées à être oxydées ou réduites sur les électrodes d'alimentation 1 et 2 lors d'un fonctionnement du système 100. Il peut aussi contenir d'autres additifs tels qu'un solvant commun aux substances électroactives, des agents anti-UV, des fluidifiants, etc.

Les substances électroactives qui sont contenues dans le volume V peuvent être, à titre d'exemple illustratif :
- la N,N,N',N' tétraméthyl-phénylènediamine, qui possède une valeur d'environ 0,2 V de potentiel d'oxydo-réduction par rapport à une électrode de référence au calomel saturé. Elle est incolore dans sa forme réduite et bleue dans sa forme oxydée ; et
- le diperchlorate d'éthyl-viologène, ou diperchlorate de N,N' diéthyl-4,4' bipyridinium, qui possède une valeur d'environ -0,7 V du potentiel d'oxydo-réduction par rapport à l'électrode au calomel saturé. Il est incolore dans sa forme oxydée et bleu dans sa forme réduite.

Lorsque la tension est nulle entre les deux électrodes d'alimentation 1 et 2, la première de ces deux substances est dans sa forme réduite, et la seconde dans sa forme oxydée, à cause de leurs valeurs respectives du potentiel d'oxydo-réduction. Le système électrochrome est alors dans sont état clair, avec une valeur élevée de la transmission lumineuse, par exemple supérieure à 70%. Lorsque la tension qui est appliquée entre les électrodes 1 et 2 est supérieure à 0,9 V environ, la N,N,N',N' tétraméthyl-phénylènediamine est oxydée au contact de celle des électrodes 1 et 2 qui est reliée à la borne de sortie positive de la source électrique, et l'éthyl-viologène est réduit au contact de l'autre électrode reliée à la borne négative de la source. Le système électrochrome 100 devient alors absorbant avec une couleur bleue, et sa transmission lumineuse peut alors être inférieure à 40%, par exemple, voire inférieure à 10%, en fonction des concentrations des espèces électroactives notamment.

Ces deux substances peuvent être introduites dans le volume V avec chacune une concentration comprise entre 0,001 et 0,5 mol.l⁻¹ (mole par litre), en fonction du niveau d'absorption lumineuse qui est recherché pour l'état absorbant du système électrochrome 100. Par exemple, les concentrations des deux espèces électroactives citées ci-dessus peuvent être égales à 0,2 mol.l⁻¹.

Le volume V qui est compris entre les parois externes 10 et 11 est divisé en cellules séparées, référencées 13. Le milieu dans lequel sont réparties les substances électroactives est donc lui-même aussi divisé en portions, qui sont contenues respectivement dans les cellules 13. Pour cela, des parois internes 12 sont ajoutées au système électrochrome, pour séparer les cellules 13 les unes des autres. Les parois internes 12 sont perpendiculaires aux parois externes 10 et 11, et forment un réseau parallèlement à ces dernières pour définir les cellules 13. La composition et le mode de réalisation des parois 12 sont supposés connus de l'Homme du métier et ne sont pas répétés ici. Par exemple, les parois 12 peuvent avoir chacune une épaisseur qui est supérieure à 0,1 µm, de préférence comprise entre 0,5 et 8 µm, et chaque cellule 13 peut avoir une dimension qui est comprise entre 50 µm et 1,5 mm par exemple, parallèlement aux parois externes 10 et 11. Les cellules 13 forment alors un pavage du système électrochrome 100, parallèlement aux parois 10 et 11, dont le motif peut être quelconque, régulier, par exemple hexagonal, ou aléatoire ou pseudo-aléatoire.

Quelque soit la disposition de l'électrode supplémentaire qui est introduite par la présente invention à l'intérieur du système électrochrome, le réseau des parois internes 12 peut avoir deux configurations distinctes par rapport aux électrodes d'alimentation.

Selon une première configuration des parois internes 12, qui est adoptée dans les modes de réalisation de l'invention illustrés par les figures 1 et 2, les portions de liquide et/ou de gel qui sont contenues dans certaines au moins des cellules 13 sont chacune en contact direct avec les deux électrodes d'alimentation 1 et 2 à l'intérieur des cellules correspondantes. Dans ce cas, des prolongements respectifs des deux électrodes 1 et 2 peuvent être communs à des cellules 13 qui sont voisines, avec certaines des parois internes 12 qui sont situées sur ces prolongements. De telles parois 12 sont moins larges que les prolongements des électrodes 1 ou 2 sur lesquels elles sont situées, de sorte que les électrodes 1 et 2 s'étendent largement dans les cellules 13. Chaque cellule 13 est alors alimentée électriquement par les deux électrodes 1 et 2, et les portions de liquide et/ou de gel qui sont contenues dans les cellules 13 peuvent toutes avoir une même composition chimique. Dans ces conditions, les cellules 13 peuvent être remplies collectivement, à partir d'une même quantité totale de liquide et/ou de gel. Dans de tels modes de réalisation, chaque cellule 13 forme un sous-système électrochrome autonome, et toutes les cellules sont commandées électriquement en parallèle pour produire des variations simultanées de transmission lumineuse.

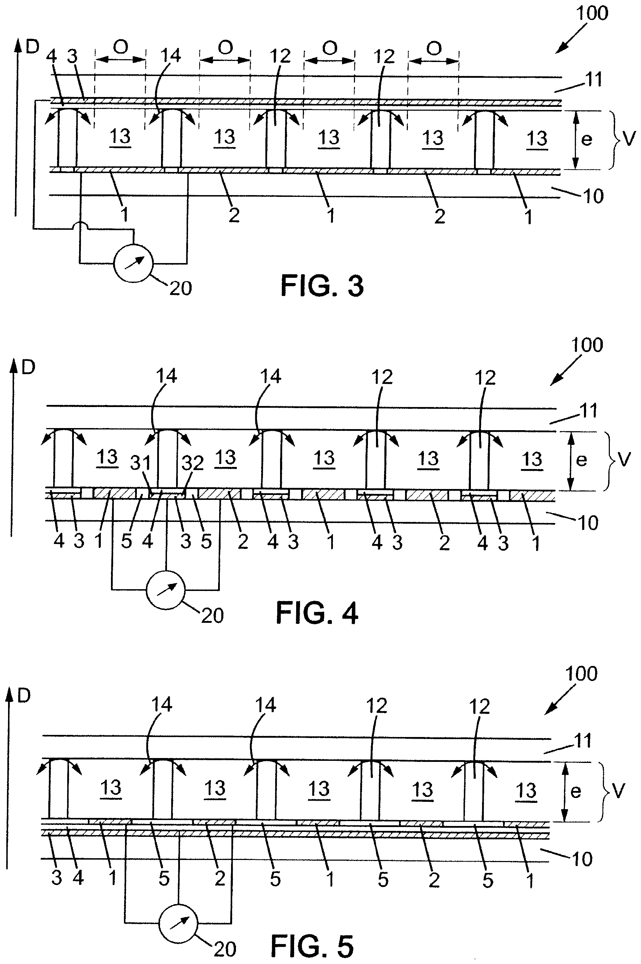

Selon une seconde configuration des parois internes 12, qui est adoptée dans les modes de réalisation des figures 3 à 6, les portions de liquide et/ou de gel qui sont contenues dans certaines au moins des cellules 13 sont chacune en contact direct avec une seule des deux électrodes d'alimentation 1 ou 2 à l'intérieur des cellules correspondantes. Dans ce cas, une cellule 13 dont la portion de liquide et/ou de gel est en contact direct uniquement avec l'une des deux électrodes d'alimentation 1 ou 2 est voisine avec au moins une autre cellule 13 dont la portion de liquide et/ou de gel est en contact électrique direct uniquement avec l'autre électrode d'alimentation. Le système comprend alors en outre un pont ionique 14 qui relie ces portions de liquide et/ou de gel des cellules voisines. De tels ponts ioniques peuvent être constitués par les parois internes 12, si celles-ci sont poreuses et contiennent des espèces ioniques, ou bien être situés entre des extrémités des parois internes 12 et l'une des parois externes 10 ou 11. Dans une telle configuration des parois internes 12 par rapport aux électrodes d'alimentation 1 et 2, chaque cellule 13 forme une demi-batterie, qui est couplée électriquement avec au moins une autre demi-batterie complémentaire et voisine, lorsqu'elles sont alimentées chacune par une électrode distincte.

Pour cette seconde configuration des parois 12, et notamment lorsque chaque électrode 1 ou 2 est reliée d'une façon constante soit à la borne de sortie positive, soit à la borne de sortie négative de la source électrique 20, il n'est pas nécessaire que toutes les portions de liquide et/ou de gel qui sont contenues dans les cellules 13 aient une même composition chimique. En particulier, les cellules 13 dont la portion de liquide et/ou de gel est en contact avec celle des électrodes 1 ou 2 qui est reliée à la borne positive peuvent ne contenir que celles des substances électroactives qui ont une valeur positive du potentiel d'oxydo-réduction. Réciproquement, les cellules 13 dont la portion de liquide et/ou de gel est en contact avec l'électrode qui est reliée à la borne de sortie négative de la source électrique 20 peuvent ne contenir que les substances électroactives dont la valeur du potentiel d'oxydo-réduction est négative. Une consommation inutile des substances électroactives peut ainsi être évitée. En outre, la concentration en espèces actives peut être augmentée utilement à l'intérieur de chaque cellule, pour obtenir une amplitude de variation de l'absorption lumineuse qui est supérieure. Dans ce cas, les cellules des deux types doivent être remplies de façon différenciée, à partir de deux compositions initiales différentes. Les valeurs des concentrations qui ont été citées plus haut dans la présente description doivent alors être considérées comme des valeurs moyennes sur l'ensemble des cellules 13 du système électrochrome entier 100.

Dans le mode de réalisation de l'invention qui est illustré par la figure 1, chaque cellule 13 est alimentée par les deux électrodes transparentes 1 et 2, celles-ci étant portées par la paroi externe 10. Le système électrochrome 100 comprend en outre une électrode supplémentaire 3 qui est portée par la paroi 11. L'électrode supplémentaire 3 peut optionnellement être recouverte par un film isolant 4, qui assure alors une isolation électrique entre l'électrode 3 et les portions de liquide et/ou de gel contenues dans les cellules 13. L'électrode supplémentaire 3 et le film isolant 4 sont transparents. Par exemple, l'électrode supplémentaire 3 peut être en oxyde d'indium dopé à l'étain et le film 4 à base de poly-paraxylylène. Les épaisseurs respectives de l'électrode 3 et du film 4 peuvent être respectivement 0,3 µm (micromètre) et 1 µm, par exemple.

L'électrode supplémentaire 3 peut avoir plusieurs configurations. Elle peut notamment s'étendre continûment entre deux cellules 13 qui sont voisines, selon des directions parallèles aux parois externes 10 et 11. Dans ce cas, elle peut s'étendre sans interruption en vis-à-vis d'une partie au moins de l'ensemble des cellules 13. Autrement dit, l'électrode supplémentaire 3 peut ne présenter aucune ouverture de façon à recouvrir sensiblement toute la paroi 11 du système 100. Alternativement, l'électrode supplémentaire 3 peut posséder des ouvertures O qui sont alignées respectivement avec les parties centrales de certaines au moins des cellules 13, selon une direction perpendiculaire aux parois externes 10 et 11. Sur la figure 1, de telles ouvertures O ne sont représentées que par les positions de leurs limites, pour indiquer leur caractère facultatif. De telles ouvertures O permettent d'augmenter la transmission lumineuse du système 100, en supprimant partiellement une absorption lumineuse que pourrait provoquer l'électrode supplémentaire 3 à l'endroit des ouvertures O.

Le système 100 peut alors être alimenté en courant électrique par une source électrique variable 20 à trois bornes de sortie : deux bornes de sortie de courant qui sont connectées respectivement aux électrodes d'alimentation 1 et 2, et une borne de référence qui est connectée à l'électrode supplémentaire 3. Les substances électroactives sont alors oxydées et réduites simultanément au contact des électrodes d'alimentation 1 et 2, d'une façon usuelle. Lorsque l'électrode supplémentaire 3 est en contact avec les portions de liquide et/ou de gel dans les cellules 13, c'est-à-dire en l'absence du film isolant 4, l'électrode supplémentaire 3 permet de fixer le potentiel électrique à l'intérieur de l'ensemble du volume V. En effet, elle permet de fixer la tension électrique qui existe entre l'une au moins des électrodes 1 ou 2 d'une part, et une partie du liquide et/ou du gel qui est distante des électrodes 1 et 2 à l'intérieur de chaque cellule 13. De cette façon, le potentiel électrique peut être contrôlé à chaque instant dans tout, ou presque tout le volume V. Ceci assure en particulier que des écarts importants de potentiel électrique n'apparaissent à aucun moment entre des points différents du volume V, qui seraient susceptibles de dégrader irréversiblement certaines des substances électroactives. Ainsi, la durée de vie du système électrochrome 100 est augmentée. Lorsqu'elle possède une telle fonction, l'électrode supplémentaire 3 est couramment appelée électrode de référence. Toutefois, le potentiel électrique de l'électrode supplémentaire 3 ne doit pas dépasser des valeurs limites, par rapport aux potentiels électriques respectifs des deux électrodes d'alimentation 1 et 2, pour éviter que certaines des espèces électroactives puissent être dégradées irréversiblement au contact de l'électrode 3. Autrement dit, la valeur du potentiel électrique de l'électrode supplémentaire 3 est sélectionnée pour garantir que l'ensemble de chaque portion de liquide et/ou de gel qui est contenue dans l'une des cellules 13 reste à l'intérieur d'un domaine de stabilité électrochimique du système. Ce domaine de stabilité est en général plus large que l'intervalle de valeurs du potentiel électrique qui correspond à la commutation du système électrochrome, de sorte que le potentiel électrique de l'électrode supplémentaire 3 n'est pas nécessairement intermédiaire entre ceux des deux électrodes d'alimentation 1 et 2.

Une fonction additionnelle de l'électrode supplémentaire 3 peut être d'attirer ou de repousser certaines substances électroactives qui sont chargées électriquement, après qu'elles aient réagi sur l'une ou l'autre des électrodes d'alimentation. Les substances électroactives oxydées et réduites sont ainsi maintenues en partie à l'écart les unes des autres. De cette façon, une neutralisation mutuelle des substances électroactives dans l'état absorbant du système peut être diminuée. Une coloration permanente du système électrochrome 100 peut ainsi être obtenue, qui est plus homogène, avec une consommation en courant électrique qui est réduite. A la lecture de cette description, l'Homme du métier saura ajuster le potentiel électrique de l'électrode supplémentaire 3 pour obtenir cette fonction additionnelle, notamment en fonction des charges électriques des espèces électroactives qui seront attirées ou repoussées à un instant déterminé du fonctionnement du système électrochrome 100. Ce potentiel électrique de l'électrode supplémentaire 3 pourra être ajusté à une valeur qui est comprise entre les valeurs de potentiel électrique respectives des deux électrodes d'alimentation 1 et 2, ou qui est située à l'extérieur de l'intervalle qui est limité par ces deux dernières valeurs. Dans ce dernier cas, le film isolant 4 est nécessaire, de nouveau pour éviter que certaines des espèces électroactives puissent réagir ou être dégradées irréversiblement au contact de l'électrode 3.

Le système électrochrome de la figure 3 correspond à celui de la figure 1, pour la configuration à une seule électrode d'alimentation par cellule 13. Le fonctionnement et l'utilisation de l'électrode supplémentaire 3, en tant qu'électrode de référence ou électrode d'attraction/répulsion électrostatique de certaines des espèces électroactives, sont identiques.

Les systèmes électrochromes des figures 4 et 5 correspondent à celui de la figure 3, hormis que l'électrode supplémentaire 3 est portée par la même des parois externes que les électrodes d'alimentation 1 et 2, c'est-à-dire la paroi 10. Si, comme il est représenté dans ces deux figures, l'électrode supplémentaire 3 est isolée électriquement par rapport aux portions de liquide et/ou de gel qui sont contenues dans les cellules 13, l'électrode supplémentaire 3 est limitée à une fonction d'attraction/répulsion électrostatique de certaines des espèces électroactives.

Dans le mode de réalisation de la figure 4, l'électrode supplémentaire 3 est disposée entre les deux électrodes d'alimentation 1 et 2, parallèlement à la paroi externe 10. Pour cela, une couche continue d'un matériau conducteur électriquement peut d'abord être déposée sur toute la face concernée de la paroi externe 10. Elle est ensuite gravée sélectivement de façon à isoler entre elles une première portion de cette couche qui est destinée à former l'électrode d'alimentation 1, une deuxième portion de cette couche qui est destinée à former l'électrode d'alimentation 2, et une troisième portion qui est intermédiaire entre les portions des électrodes 1 et 2 et destinée à former l'électrode supplémentaire 3. L'électrode 3 peut être située ainsi entre les dents imbriquées des peignes des électrodes 1 et 2, et possède une forme linéaire en allers-retours continus, c'est-à-dire une forme en méandres. Des intervalles dans lesquels la couche a été gravée, isolent électriquement l'électrode 3 des électrodes 1 et 2. De cette façon, l'électrode supplémentaire 3 et les électrodes d'alimentation 1, 2 ont des matériaux constitutifs qui sont identiques, et peuvent être réalisées en une étape unique de dépôt de matériau conducteur.

Certaines des parois internes 12 peuvent être situées sur l'électrode supplémentaire 3. L'électrode supplémentaire 3 s'étend alors continûment entre deux cellules 13 qui sont voisines, parallèlement à la paroi 10. En outre, elle est située entre la paroi interne 12 qui sépare ces cellules voisines et la paroi externe 10, selon la direction D. Pour avoir un effet électrique significatif dans chaque cellule 13, l'électrode supplémentaire 3 peut présenter des débordements 31, 32 de chaque côté d'une paroi interne 12 qui sépare des cellules voisines 13, au-delà de cette paroi 12. Les débordements ont des extensions supérieures à 2 µm, de préférence supérieures à 3 µm, perpendiculairement à la paroi interne 12.

Dans ce mode de réalisation de l'invention, des portions 5 d'un matériau isolant électriquement et transparent peuvent être formées dans les intervalles de séparation entre l'électrode supplémentaire 3 et chacune des électrodes 1 et 2. Ces portions 5, avec une portion du film 4 qui est située sur l'électrode 3, assurent qu'aucun contact électrique n'est présent entre l'électrode supplémentaire 3 et les portions de liquide et/ou de gel qui sont contenues dans les cellules 13.

Deux perfectionnements alternatifs du mode de réalisation de la figure 4 sont maintenant décrits, pour réduire la visibilité de la séparation entre l'électrode 3 et chacune des électrodes 1 et 2. Selon le premier de ces perfectionnements, les portions 5 qui sont portées par la paroi 10, les électrodes d'alimentation 1 et 2, et l'électrode supplémentaire 3 ont sensiblement une même épaisseur optique commune selon la direction D perpendiculaire aux parois externes. La portion éventuelle de film isolant 4 qui est située sur l'électrode supplémentaire 3 est comptée avec cette dernière dans l'épaisseur optique. Autrement dit, le système 100 présente sensiblement une même épaisseur optique selon la direction D à travers les portions 5, les électrodes 1 et 2, et l'électrode 3 avec le film 4 éventuel. Un tel ajustement de l'épaisseur optique des portions 5 réduit la lumière qui est diffusée ou diffractée par les intervalles inter-électrodes présents de chaque côté de l'électrode 3. Alternativement, des quantités d'un matériau absorbant peuvent être portées par la paroi 10, entre l'électrode supplémentaire 3 et chacune des électrodes d'alimentation 1 et 2. De telles quantité de matériau absorbant peuvent aussi réduire la visibilité des intervalles de séparation entre l'électrode 3 et les deux électrodes 1 et 2, en réduisant ou supprimant la lumière qui est transmise à travers ces intervalles. Les portions 5 peuvent être constituées elles-mêmes par ces quantités de matériau absorbant, ou bien le matériau absorbant peut être une encre qui est diffusée localement dans la paroi 10 au droit des intervalles de séparation inter-électrodes.

Dans le mode de réalisation de la figure 5, l'électrode supplémentaire 3 est encore portée par la paroi 10, comme les électrodes d'alimentation 1 et 2, mais elle est disposée entre la paroi 10 d'une part et les électrodes 1 et 2 d'autre part, selon la direction D. Le film 4 est alors situé entre l'électrode supplémentaire 3 et chacune des électrodes d'alimentation 1 et 2. La fonction de l'électrode 3 lorsqu'elle est ainsi disposée est encore d'attirer ou de repousser certaines des espèces électroactives, en fonction de leur charge électrique et de l'état de fonctionnement du système électrochrome à un instant donné. Dans ce cas, les portions 5 peuvent être remplacées par une portion unique, encore référencée 5, qui s'étend continûment entre les bords des électrodes d'alimentation 1 et 2.

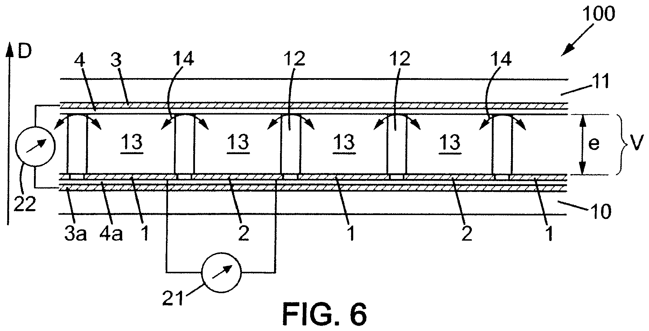

D'une façon générale, un système électrochrome 100 selon l'invention peut comprendre en outre une autre électrode supplémentaire, qui est portée par l'autre des parois externes 10 et 11 que celle qui porte l'électrode supplémentaire 3. Cette autre électrode supplémentaire est référencée 3a sur les figures 2 et 6. De cette façon, les deux électrodes supplémentaires 3 et 3a forment un condensateur qui contient le volume V. Ce condensateur crée un champ électrostatique dans le volume V, qui permet encore d'attirer ou de repousser certaines des espèces électroactives. Les figures 2 et 6 correspondent respectivement aux figures 1 et 3 en ajoutant l'électrode 3a. Dans ces modes particuliers de réalisation de l'invention, l'électrode 3a est portée par la paroi 10.

Dans ce cas, le système 100 comprend en outre un autre film isolant électriquement 4a, qui est disposé entre ladite autre électrode supplémentaire 3a et la portion de liquide et/ou de gel contenue dans chacune des cellules 13. De cette façon, un contact électrique entre l'électrode 3a et chacune des électrodes 1 et 2 est supprimé, ainsi que le contact entre l'électrode 3a et la portion de liquide et/ou de gel. Le système peut alors comprendre un ensemble de source électrique 21 à deux bornes de sortie de courant électrique. Ces deux bornes de sortie de courant sont reliées respectivement aux deux électrodes d'alimentation 1 et 2. Elles fournissent le courant qui est nécessaire à l'oxydation et la réduction des substances électroactives responsables de la coloration réversible du système 100. En outre, un ensemble de polarisation électrique 22 est ajouté au système 100. L'ensemble 22 possède deux bornes de sortie de tension électrique qui sont reliées respectivement aux électrodes supplémentaires 3 et 3a. L'ensemble 22 permet de créer un champ électrique supplémentaire dans le volume V, pour provoquer une migration de certaines au moins des substances électroactives qui sont chargées électriquement, vers les électrodes d'alimentation 1 et 2 ou au contraire vers la paroi 11. Une sélection adéquate de la polarité des électrodes 3 et 3a pendant une transition du système 100 de l'état clair vers l'état absorbant, ou à l'inverse de l'état absorbant vers l'état clair, ainsi qu'une sélection adéquate de la tension de polarisation qui est délivrée par l'ensemble 22, permet d'accélérer cette transition. Le temps de réponse du système 100 peut ainsi être réduit. Le film isolant 4 qui recouvre l'électrode 3 est encore nécessaire si le potentiel électrique de cette électrode est situé à un instant du fonctionnement du système électrochrome à l'extérieur de l'intervalle limité par les valeurs respectives des potentiels électriques des électrodes d'alimentation 1 et 2.

Il est aussi possible de réduire la neutralisation réciproque entre les substances électroactives qui sont oxydées et réduites sur les électrodes d'alimentation 1 et 2 dans l'état absorbant, en appliquant une tension électrique adéquate entre les électrodes 3 et 3a. Par exemple, certaines des substances électroactives qui ont été oxydées ou réduites sur les électrodes d'alimentation 1 et 2 peuvent, lorsqu'elles sont chargées, être maintenues séparément au voisinage de ces électrodes d'alimentation, par le champ électrique qui est produit par les électrodes supplémentaires 3 et 3a.

De façon générale et facultativement, pour améliorer un fonctionnement transitoire du système 100, une tension électrique peut être appliquée entre l'une des électrodes supplémentaire 3 ou 3a d'une part, et l'une au moins des électrodes d'alimentation 1 et 2 d'autre part, de sorte que l'électrode 3 ou 3a concernée ait un potentiel électrique qui est en dehors d'un intervalle limité par les potentiels électriques respectifs des électrodes d'alimentation 1 et 2. Au moins une des substances électroactives est alors attirée électrostatiquement vers cette électrode 3 ou 3a.

Lorsqu'une seule des électrodes d'alimentation 1, 2 est en contact avec la portion de liquide et/ou de gel qui est contenue dans chaque cellule 13, et lorsque l'électrode supplémentaire 3 est portée par l'autre des parois externes 10, 11 que celle qui porte les électrodes d'alimentation (figures 3 et 6), il peut être avantageux que certaines au moins des parois internes 12 s'étendent jusqu'à l'électrode supplémentaire 3 selon la direction D. De cette façon, les parois 12 évitent que les espèces électroactives qui sont situées à proximité de l'électrode supplémentaire 3 ne passent d'une cellule à une cellule voisine. Ainsi, des espèces électroactives qui sont attirées par l'électrode supplémentaire 3 dans des cellules 13 différentes ne se neutralisent pas réciproquement. Dans ce cas, le pont ionique 14 peut être réalisé à travers les parois internes 12, ou par un passage situé aux extrémités de ces parois 12 qui sont situées du côté de celle des parois externes 10, 11 qui porte les électrodes d'alimentation 1 et 2. Lorsque le film isolant 4 est présent sur l'électrode supplémentaire 3, les parois internes 12 s'étendent jusqu'à ce film 4 pour fermer de la même façon les cellules 13 du côté de la paroi externe 11, pour les substances électroactives.

Il est entendu que l'invention peut être reproduite en adaptant des caractéristiques qui ont été citées à titre d'exemple, tout en conservant certains au moins des avantages mentionnés. En particulier, l'Homme du métier comprendra que les positions de la ou des électrodes supplémentaires qui sont introduites par l'invention, par rapport aux parois externes du système, peuvent être combinées à volonté avec les dispositions des parois internes par rapport aux électrodes d'alimentation.

En outre, les valeurs de concentrations et/ou les dimensions des éléments du système électrochrome peuvent être modifiées pour chaque application qui est considérée. Des substances ioniques supplémentaires peuvent aussi être ajoutées à la composition du liquide et/ou de gel, notamment pour augmenter sa conduction ionique.

## Revendications

1. Système électrochrome transparent (100), permettant une vision distincte à travers ledit système, formant un vitrage, un hublot d'avion, un verre de lunettes ophtalmiques, une visière de casque, un verre de masque, ou une pastille destinée à être appliquée sur un verre ophtalmique, une visière de casque ou un verre de masque, et comprenant :
- deux parois externes (10, 11) parallèles, le système étant transparent pour une direction de regard traversant les parois externes entre deux côtés opposés,
- un réseau de parois internes (12) disposé entre les deux parois externes, les dites parois internes s'étendant perpendiculairement aux dites parois externes et définissant un ensemble de cellules (13) juxtaposées parallèlement aux dites parois externes ;
- des portions de liquide et/ou de gel contenues respectivement dans les cellules (13) ;
- des premières et secondes substances électroactives réparties dans les portions de liquide et/ou de gel, avec des potentiels électriques respectifs d'oxydo-réduction qui sont différents, certaines au moins des premières et secondes substances électroactives ayant un effet optique variable entre une forme oxydée et une forme réduite des dites substances ;
- deux électrodes d'alimentation transparentes (1, 2) portées ensemble par une même (10) des deux parois externes, et destinées à être reliées respectivement à deux bornes d'alimentation d'un ensemble de source électrique variable (20 ; 21), chacune des dites électrodes d'alimentation étant en contact électrique direct avec les portions de liquide et/ou de gel contenues dans certaines au moins des cellules (13) pour transférer des électrons vers ou à partir de certaines au moins des substances électroactives, d'une façon inverse entre les dites premières et secondes substances électroactives à un même instant ;
**caractérisé en ce que** le système comprend en outre au moins une électrode transparente supplémentaire (3) sans contact électrique direct avec les dites électrodes d'alimentation (1, 2) à l'intérieur du système électrochrome, ladite électrode supplémentaire étant parallèle aux dites électrodes d'alimentation à l'intérieur de certaines au moins des cellules (13),
et le système comprend en outre, pour certaines au moins des cellules (13), un film isolant électriquement (4) disposé entre l'électrode supplémentaire (3) et la portion de liquide et/ou de gel contenue dans chacune des dites cellules, de façon à supprimer un contact entre ladite portion de liquide et/ou de gel et l'électrode supplémentaire.

2. Système selon la revendication 1, dans lequel l'électrode supplémentaire (3) est portée par l'autre (11) des deux parois externes que celle qui porte les électrodes d'alimentation (1, 2).

3. Système selon la revendication 2, dans lequel l'électrode supplémentaire (3) s'étend continûment entre deux cellules (13) voisines, selon des directions parallèles aux parois externes (10, 11).

4. Système selon la revendication 3, dans lequel l'électrode supplémentaire (3) s'étend sans interruption en vis-à-vis d'une partie au moins de l'ensemble des cellules (13).

5. Système selon la revendication 3, dans lequel l'électrode supplémentaire (3) possède une ouverture (O) alignée avec une partie centrale de certaines au moins des cellules (13), selon une direction (D) perpendiculaire aux parois externes (10, 11).

6. Système selon la revendication 1, dans lequel l'électrode supplémentaire (3) est portée par la même (10) des deux parois externes que celle qui porte les électrodes d'alimentation (1, 2), et est disposée entre lesdites deux électrodes d'alimentation selon une direction parallèle à ladite paroi externe.

7. Système selon la revendication 6, dans lequel l'électrode supplémentaire (3) et les électrodes d'alimentation (1, 2) ont des matériaux constitutifs identiques.

8. Système selon la revendication 6 ou 7, dans lequel l'électrode supplémentaire (3) s'étend continûment entre deux cellules voisines (13), et est située entre la paroi interne (12) séparant lesdites cellules voisines et la paroi externe (10) portant les électrodes d'alimentation (1, 2) et l'électrode supplémentaire (3).

9. Système selon la revendication 8, dans lequel l'électrode supplémentaire (3) présente des débordements (31, 32) de chaque côté de la paroi interne (12) séparant lesdites cellules voisines (13), lesdits débordements ayant des extensions supérieures à 2 µm, de préférence supérieures à 3 µm, perpendiculairement à ladite paroi interne.

10. Système selon l'une quelconque des revendications 6 à 9, comprenant en outre des portions (5) d'un matériau isolant et transparent portées par celles des parois externes (10) qui porte les électrodes d'alimentation (1, 2) et l'électrode supplémentaire (3), entre l'électrode supplémentaire et chacune des électrodes d'alimentation, de sorte que le système (100) présente sensiblement une même épaisseur optique selon une direction (D) perpendiculaire aux parois externes, à travers les dites portions de matériau isolant, lesdites électrodes d'alimentation et ladite électrode supplémentaire éventuellement recouverte d'une portion de film isolant électriquement (4).

11. Système selon l'une quelconque des revendications 6 à 9, comprenant en outre des quantités d'un matériau absorbant portées par celles des parois externes (10) qui porte les électrodes d'alimentation (1, 2) et l'électrode supplémentaire (3), les dites quantités de matériau absorbant étant situées entre ladite électrode supplémentaire et chacune des électrodes d'alimentation.

12. Système selon la revendication 1, dans lequel l'électrode supplémentaire (3) est portée par la même (10) des deux parois externes que celle qui porte les électrodes d'alimentation (1, 2), et est disposée entre ladite paroi externe et lesdites deux électrodes d'alimentation, selon une direction (D) perpendiculaire à la paroi externe, le film isolant (4) étant en outre intermédiaire entre ladite électrode supplémentaire et chacune des dites électrodes d'alimentation.

13. Système selon l'une quelconque des revendications précédentes, comprenant en outre une autre électrode supplémentaire (3a) portée par l'autre des parois externes (10, 11) que celle qui porte ladite électrode supplémentaire (3).

14. Système selon la revendication 13, comprenant en outre, pour certaines au moins des cellules (13), un autre film isolant (4a) électriquement disposé entre l'autre électrode supplémentaire (3a) et la portion de liquide et/ou de gel contenue dans chacune des dites cellules, de façon à supprimer un contact entre ladite portion de liquide et/ou de gel et ladite autre électrode supplémentaire.

15. Système selon l'une quelconque des revendications 1 à 14, dans lequel les portions de liquide et/ou de gel contenues dans certaines au moins des cellules (13) sont chacune en contact électrique direct avec les deux électrodes d'alimentation (1, 2) à l'intérieur des cellules correspondantes.

16. Système selon l'une quelconque des revendications 1 à 14, dans lequel les deux électrodes d'alimentation (1, 2) sont disposées de sorte que chaque portion de liquide et/ou de gel contenue dans une cellule (13) soit en contact électrique direct avec une seule des dites électrodes d'alimentation, et de sorte que chaque cellule alimentée électriquement par l'une des deux électrodes d'alimentation soit voisine avec au moins une autre cellule alimentée électriquement par l'autre électrode d'alimentation, et le système (100) comprenant en outre un pont ionique (14) reliant lesdites cellules voisines.

17. Système selon la revendication 16 ensemble l'une des revendications 2 à 5, dans lequel certaines au moins des parois internes (12) s'étendent jusqu'à l'électrode supplémentaire (3), selon une direction (D) perpendiculaire aux parois externes (10, 11), de sorte que lesdites parois internes évitent que des espèces électroactives qui sont situées à proximité de ladite électrode supplémentaire ne passent d'une cellule (13) à une cellule voisine.

18. Système selon l'une quelconque des revendications précédentes, comprenant en outre un ensemble de source électrique (20) à trois bornes de sortie, deux des dites bornes de sortie étant connectées électriquement et respectivement aux deux électrodes d'alimentation (1, 2) pour produire un courant électrique circulant dans le système (100), une autre borne de sortie de l'ensemble de source électrique étant connectée à l'électrode supplémentaire (3), et l'ensemble de source étant adapté pour contrôler de façon variable au moins une tension électrique présente entre l'une des dites électrodes d'alimentation et l'électrode supplémentaire.

19. Système selon la revendication 13 ou 14, comprenant en outre un ensemble de source électrique (21) ayant deux bornes de sortie de courant électrique reliées respectivement aux deux électrodes d'alimentation (1, 2) du système (100), et comprenant en outre un ensemble de polarisation électrique (22) ayant deux bornes de sortie de tension électrique reliées respectivement à l'électrode supplémentaire (3) et à ladite autre électrode supplémentaire (3a).

20. Procédé d'utilisation d'un système électrochrome transparent selon l'une quelconque des revendications précédentes, suivant lequel une tension électrique est appliquée entre l'électrode supplémentaire (3) et l'une au moins des électrodes d'alimentation (1, 2), de sorte que ladite électrode supplémentaire ait un potentiel électrique qui est en dehors d'un intervalle limité par des potentiels électriques respectifs des dites électrodes d'alimentation, les dits potentiels électriques étant mesurés par rapport à une borne de référence commune.

## Patentansprüche

1. Transparentes elektrochromes System (100), das ein deutliches Sehen durch das System ermöglicht, bildend eine Verglasung, ein Flugzeugfenster, ein ophthalmisches Brillenglas, ein Helmvisier, ein Maskenglas, oder ein Plättchen, das dazu bestimmt ist, auf einem ophthalmischen Glas, einem Helmvisier oder einem Maskenglas angebracht zu werden, und umfassend:
- zwei parallele Außenwände (10, 11), wobei das System transparent für eine Blickrichtung durch die Außenwände zwischen zwei gegenüberliegenden Seiten ist,
- ein Netz von Innenwänden (12), die zwischen den beiden Außenwänden angeordnet sind, wobei die Innenwände sich senkrecht zu den Außenwänden erstrecken und einen Satz von Zellen (13) definieren, die parallel zu den Außenwänden nebeneinander angeordnet sind;
- Abschnitte von Flüssigkeiten und/oder Gel, die jeweils in den Zellen (13) enthalten sind;
- erste und zweite elektroaktive Substanzen, die sich auf die Abschnitte von Flüssigkeiten und/oder Gel verteilen, mit jeweils unterschiedlichen elektrischen Redoxpotentialen, wobei zumindest einige der ersten und zweiten elektroaktiven Substanzen einen optisch veränderbaren Effekt zwischen einer oxidierten Form und einer reduzierten Form der Substanzen haben;
- zwei transparente Einspeiseelektroden (1, 2), die gemeinsam durch die gleiche (10) der beiden Außenwände getragen werden und dazu bestimmt sind, jeweils mit zwei Versorgungsanschlüssen einer variablen Stromquelleneinheit (20; 21) verbunden zu werden, wobei jede der Einspeiseelektroden direkten elektrischen Kontakt mit den Abschnitten von Flüssigkeiten und/oder Gel hat, die in zumindest einigen der Zellen (13) enthalten sind, um Elektronen zu oder von den zumindest einigen elektroaktiven Substanzen zu übertragen, zur selben Zeit invers zwischen den ersten und zweiten elektroaktiven Substanzen;
**dadurch gekennzeichnet, dass** das System ferner mindestens eine weitere transparente Elektrode (3) enthält, die nicht in direktem elektrischen Kontakt mit den Einspeiseelektroden (1, 2) im Inneren des elektrochromen Systems steht, wobei die weitere Elektrode parallel zu den Einspeiseelektroden im Inneren der zumindest einigen der Zellen (13) verläuft,
und das System ferner für zumindest einige der Zellen (13) eine elektrisch isolierende Folie (4) enthält, die zwischen der weiteren Elektrode (3) und dem Abschnitt von Flüssigkeit und/oder Gel angeordnet ist, der in jeder der Zellen enthalten ist, sodass ein Kontakt zwischen dem Abschnitt von Flüssigkeit und/oder Gel und der weiteren Elektrode unterbunden wird.

2. System nach Anspruch 1, bei dem die weitere Elektrode (3) durch diejenige (11) der beiden Außenwände getragen wird, die nicht die Einspeiseelektroden (1, 2) trägt.

3. System nach Anspruch 2, bei dem die weitere Elektrode (3) sich in zu den Außenwänden (10, 11) paralleler Richtung kontinuierlich zwischen zwei benachbarten Zellen (13) erstreckt.

4. System nach Anspruch 3, bei dem die weitere Elektrode (3) sich ohne Unterbrechung zumindest einem Teil des Satzes von Zellen (13) gegenüberliegend erstreckt.

5. System nach Anspruch 3, bei dem die weitere Elektrode (3) eine Öffnung (O) aufweist, die in eine zu den Außenwänden (10, 11) senkrechte Richtung (D) zu einem zentralen Abschnitt von zumindest einigen der Zellen (13) ausgerichtet ist.

6. System nach Anspruch 1, bei dem die weitere Elektrode (3) durch dieselbe (10) der beiden Außenwände getragen wird, die die Einspeiseelektroden (1, 2) trägt, und in einer zu dieser Außenwand parallelen Richtung zwischen den beiden Einspeiseelektroden angeordnet ist.

7. System nach Anspruch 6, bei dem die weitere Elektrode (3) und die Einspeiseelektroden (1, 2) aus den gleichen Materialien bestehen.

8. System nach Anspruch 6 oder 7, bei dem die weitere Elektrode (3) sich kontinuierlich zwischen zwei benachbarten Zellen (13) erstreckt und zwischen der Innenwand (12), die diese benachbarten Zellen trennt, und der Außenwand (10) liegt, die die Einspeiseelektroden (1, 2) und die weitere Elektrode (3) trägt.

9. System nach Anspruch 8, bei dem die weitere Elektrode (3) Vorsprünge (31, 32) an jeder Seite der Innenwand (12) aufweist, die diese benachbarten Zellen (13) trennt, wobei die Vorsprünge sich senkrecht zu der Innenwand um mehr als 2 µm, bevorzugt mehr als 3 µm, erstrecken.

10. System nach einem der Ansprüche 6 bis 9, ferner umfassend Teile (5) aus einem transparenten isolierenden Material, die durch diejenigen Außenwände (10) getragen werden, die die Einspeiseelektroden (1, 2) und die weitere Elektrode (3) tragen, und zwischen der weiteren Elektrode und jeder der Einspeiseelektroden liegen, sodass das System (100) im Wesentlichen über die Teile aus isolierendem Material, die Einspeiseelektroden und die gegebenenfalls mit einem Abschnitt einer elektrisch isolierenden Folie (4) bedeckte weitere Elektrode eine gleiche optische Dicke in zu den Außenwänden senkrechter Richtung (D) aufweist.

11. System nach einem der Ansprüche 6 bis 9, ferner umfassend Mengen eines absorbierenden Materials, die durch diejenigen Außenwände (10) getragen werden, die die Einspeiseelektroden (1, 2) und die weitere Elektrode (3) tragen, wobei diese Mengen eines absorbierenden Materials zwischen der weiteren Elektrode und jeder der Einspeiseelektroden liegen.

12. System nach Anspruch 1, bei dem die weitere Elektrode (3) durch dieselbe (10) der beiden Außenwände getragen wird, die die Einspeiseelektroden (1, 2) trägt, und in einer zu der Außenwand senkrechten Richtung (D) zwischen dieser Außenwand und den beiden Einspeiseelektroden angeordnet ist, wobei die isolierende Folie (4) ferner Mittler zwischen der weiteren Elektrode und jeder der Einspeiseelektroden ist.

13. System nach einem der vorangehenden Ansprüche, ferner umfassend noch eine weitere Elektrode (3a), die durch diejenige der Außenwände (10, 11) getragen wird, die nicht die weitere Elektrode (3) trägt.

14. System nach Anspruch 13, ferner für zumindest einige der Zellen (13) umfassend noch eine elektrisch isolierende Folie (4a), die zwischen der noch weiteren Elektrode (3a) und dem Abschnitt von Flüssigkeit und/oder Gel, der in jeder der Zellen enthalten ist, angeordnet ist, sodass ein Kontakt zwischen dem Abschnitt von Flüssigkeit und/oder Gel und der noch weiteren Elektrode unterbunden wird.

15. System nach einem der Ansprüche 1 bis 14, bei dem die Abschnitte von Flüssigkeit und/oder Gel, die in zumindest einigen der Zellen (13) enthalten sind, alle direkten elektrischen Kontakt mit den beiden Einspeiseelektroden (1, 2) im Inneren der entsprechenden Zellen haben.

16. System nach einem der Ansprüche 1 bis 14, bei dem die beiden Einspeiseelektroden (1, 2) so angeordnet sind, dass jeder Abschnitt von Flüssigkeit und/oder Gel, der in einer Zelle (13) enthalten ist, direkten elektrischen Kontakt mit nur einer der Einspeiseelektroden hat, und dass jede Zelle, die durch die eine der beiden Einspeiseelektroden mit Strom versorgt wird, benachbart zu zumindest einer anderen Zelle ist, die durch die andere Einspeiseelektrode mit Strom versorgt wird, wobei das System (100) ferner eine Ionenbrücke (14) umfasst, die diese benachbarten Zellen verbindet.

17. System nach Anspruch 16 zusammen mit einem der Ansprüche 2 bis 5, bei dem zumindest einige der Innenwände (12) sich in eine zu den Außenwänden (10, 11) senkrechte Richtung (D) bis zu der weiteren Elektrode (3) erstrecken, sodass diese Innenwände vermeiden, dass elektroaktive Spezies, die sich in der Nähe der weiteren Elektrode befinden, von einer Zelle (13) in eine benachbarte Zelle übergehen.

18. System nach einem der vorangehenden Ansprüche, ferner umfassend eine Stromquelleneinheit (20) mit drei Ausgangsanschlüssen, wobei zwei dieser Ausgangsanschlüsse elektrisch jeweils mit den beiden Einspeiseelektroden (1, 2) verbunden sind, um einen elektrischen Strom zu erzeugen, der in dem System (100) fließt, ein anderer Ausgangsanschluss der Stromquelleneinheit mit der weiteren Elektrode (3) verbunden ist und die Stromquelleneinheit dazu ausgelegt ist, zumindest eine elektrische Spannung zwischen der einen der Einspeiseelektroden und der weiteren Elektrode variabel zu steuern.

19. System nach Anspruch 13 oder 14, ferner umfassend eine Stromquelleneinheit (21) mit zwei Ausgangsanschlüssen von elektrischem Strom, die jeweils mit den beiden Einspeiseelektroden (1, 2) des Systems (100) verbunden sind, und ferner umfassend eine elektrische Vorspannungseinheit (22) mit zwei Ausgangsanschlüssen von elektrischer Spannung, die jeweils mit der weiteren Elektrode (3) und der noch weiteren Elektrode (3a) verbunden sind.

20. Verfahren zur Anwendung eines transparenten elektrochromen Systems nach einem der vorangehenden Ansprüche, bei dem eine elektrische Spannung zwischen der weiteren Elektrode (3) und zumindest einer der Einspeiseelektroden (1, 2) angelegt wird, sodass die weitere Elektrode ein elektrisches Potential hat, das außerhalb eines Bereiches liegt, der durch die jeweiligen elektrischen Potentiale der Einspeiseelektroden begrenzt wird, wobei diese elektrischen Potentiale für einen gemeinsamen Referenzanschluss gemessen werden.

## Claims

1. Transparent electrochromic system (100), allowing clear vision through said system, forming a glazing, an aircraft window, an ophthalmic spectacle lens, a helmet visor, a mask lens, or a pellet intended to be applied to an ophthalmic lens, a helmet visor or a mask lens, and comprising:
- two parallel outer walls (10, 11), the system being transparent for a viewing direction passing through through the outer walls between two opposite sides;
- a network of internal walls (12) placed between the two outer walls, said internal walls extending perpendicularly to said outer walls and defining a set of cells (13) juxtaposed in parallel to said outer walls;
- portions of liquid and/or gel contained respectively in the cells (13);
- first and second electroactive substances distributed in the portions of liquid and/or gel, with respective electrical redox potentials that are different, at least some of the first and second electroactive substances having a variable optical effect between an oxidized form and a reduced form of said substances;
- two transparent power supply electrodes (1, 2) carried together by a single one (10) of the two outer walls, and intended to be connected respectively to two power supply terminals of a variable electrical power supply unit (20, 21), each of said power supply electrodes being in direct electrical contact with the portions of liquid and/or gel contained in at least some of the cells (13) for transferring electrons to or from at least some of the electroactive substances, in an inverse fashion between said first and second electroactive substances at a given time;
**characterized in that** the system further comprises at least one additional transparent electrode (3) without direct electrical contact with said power supply electrodes (1, 2) inside the electrochromic system, said additional electrode being parallel to said power supply electrodes inside at least some of the cells (13),
and the system further comprises, for at least some of the cells (13), an electrically insulating film (4) placed between the additional electrode (3) and the portion of liquid and/or gel contained in each of said cells, so as to prevent contact between said portion of liquid and/or gel and the additional electrode.

2. System according to Claim 1, in which the additional electrode (3) is carried by the other (11) of the two outer walls than the one carrying the power supply electrodes (1, 2).

3. System according to Claim 2, in which the additional electrode (3) extends continuously between two adjacent cells (13) along directions parallel to the outer walls (10, 11).

4. System according to Claim 3, in which the additional electrode (3) extends without interruption opposite at least a portion of all of the cells (13).

5. System according to Claim 3, in which the additional electrode (3) has an opening (O) aligned with a central portion of at least some of the cells (13), along a direction (D) perpendicular to the outer walls (10, 11).

6. System according to Claim 1, in which the additional electrode (3) is carried by the same (10) of the two outer walls as the one carrying the power supply electrodes (1, 2), and is placed between said two power supply electrodes along a direction parallel to said outer wall.

7. System according to Claim 6, in which, the additional electrode (3) and the power supply electrodes (1, 2) have identical constituent materials.

8. System according to Claim 6 or 7, in which the additional electrode (3) extends continuously between two adjacent cells (13), and is located between the internal wall (12) separating said adjacent cells and the outer wall (10) carrying the power supply electrodes (1, 2) and the additional electrode (3).

9. System according to Claim 8, in which the additional electrode (3) has projections (31, 32) on each side of the internal wall (12) separating said adjacent cells (13), said projections having extensions greater than 2 µm, preferably greater than 3 µm, perpendicular to said internal wall.

10. System according to any one of Claims 6 to 9, further comprising portions (5) of an insulating and transparent material carried by those of the outer walls (10) which carries the power supply electrodes (1, 2) and the additional electrode (3), between the additional electrode and each of the power supply electrodes, so that the system (100) substantially has the same optical thickness along a direction (D) perpendicular to the outer walls, across said portions of insulating material, said power supply electrodes and said additional electrode optionally being covered with a portion of electrically insulating film (4).

11. System according to any one of Claims 6 to 9, further comprising quantities of an absorbent material carried by those of the outer walls (10) which carries the power supply electrodes (1, 2) and the additional electrode (3), said quantities of absorbent material being located between said additional electrode and each of the power supply electrodes.

12. System according to Claim 1, in which the additional electrode (3) is carried by the same (10) of the two outer walls as the one carrying the power supply electrodes (1, 2) and is placed between said outer wall and said two power supply electrodes, along a direction (D) perpendicular to the outer wall, the insulating film (4) further being placed between said additional electrode and each of said power supply electrodes.

13. System according to any one of the preceding claims, further comprising another additional electrode (3a) carried by the other of the outer walls (10, 11) than the one carrying said additional electrode (3).

14. System according to Claim 13, further comprising, for at least some of the cells (13), another electrically insulating film (4a) placed between the other additional electrode (3a) and the portion of liquid and/or gel contained in each of said cells, so as to prevent contact between said portion of liquid and/or gel and said other additional electrode.

15. System according to any one of Claims 1 to 14, in which the portions of liquid and/or gel contained in at least some of the cells (13) are each in direct electrical contact with the two power supply electrodes (1, 2) inside the corresponding cells.

16. System according to any one of Claims 1 to 14, in which the two power supply electrodes (1, 2) are placed so that each portion of liquid and/or gel contained in a cell (13) is in direct electrical contact with only one of said power supply electrodes, and so that each cell electrically powered by one of the two power supply electrodes is adjacent to at least one other cell electrically powered by the other power supply electrode, and the system (100) further comprising an ionic bridge (14) connecting said adjacent cells.

17. System according to Claim 16 together with one of Claims 2 to 5, in which at least some of the internal walls (12) extend to the additional electrode (3), along a direction (D) perpendicular to the outer walls (10, 11), so that said internal walls prevent electroactive species which are located close to said additional electrode from passing from a cell (13) to an adjacent cell.

18. System according to any one of the preceding claims, further comprising an electrical power supply unit (20) having three output terminals, two of said output terminals being connected electrically and respectively to the two power supply electrodes (1, 2) to generate an electrical current flowing in the system (100), another output terminal of the electrical power supply unit being connected to the additional electrode (3), and the power supply unit being suitable for variably controlling at least one electrical voltage present between one of said power supply electrodes and the additional electrode.

19. System according to Claim 13 or 14, further comprising an electrical power supply unit (21) having two electrical current output terminals connected respectively to the two power supply electrodes (1, 2) of the system (100), and further comprising an electric polarization unit (22) having two electrical voltage output terminals connected respectively to the additional electrode (3) and to said other additional electrode (3a).

20. Method for using a transparent electrochromic system according to any one of the preceding claims, whereby an electrical voltage is applied between the additional electrode (3) and at least one of the power supply electrodes (1, 2), so that said additional electrode has an electrical potential lying outside an interval bounded by respective electrical potentials of said power supply electrodes, said electrical potentials being measured with regard to a common reference terminal.
